(19) Europäisches Patentamt
European Patent Office
Office européen des brevets

(11) Veröffentlichungsnummer: **0 232 792**
**A1**

# (12) EUROPÄISCHE PATENTANMELDUNG

(21) Anmeldenummer: **87101090.6**

(22) Anmeldetag: **27.01.87**

(51) Int. Cl.⁴: **H01R 13/453** , H01R 13/658

(30) Priorität: **14.02.86 DE 3604764**

(43) Veröffentlichungstag der Anmeldung: **19.08.87 Patentblatt 87/34**

(84) Benannte Vertragsstaaten: **DE ES FR GB IT SE**

(71) Anmelder: **DYNAMIT NOBEL AKTIENGESELLSCHAFT**
**Postfach 1261**
**D-5210 Troisdorf, Bez. Köln(DE)**

(72) Erfinder: **Mathey, Christoph**
**Auf der Heide 34**
**D-5461 Ockenfels(DE)**

## (54) Elektrische Steckverbindung.

(57) Um zu verhindern, daß vor oder bei dem Zusammenstecken der Steckerteile (C1, C2) elektromagnetische Wellen als Störstrahlung in ein Steckerteil eindringen, ist die Öffnung dieses Steckerteils (C2) mit einer Schutzwand (18) verschlossen, die beim Ineinanderstecken der Steckerteile selbsttätig öffnet, nachdem die Gehäuse (2,11) sich bereits überlappen. Die Öffnung des Steckerteils - (C2) wird erst freigelegt, nachdem die äußere Abschirmung der elektrischen Teile durch die ineinandergreifenden Gehäuse (2,11) vervollständigt ist. Dadurch werden Störsignale in den Leitungen durch eingestreute elektromagnetische Wellen vermieden.

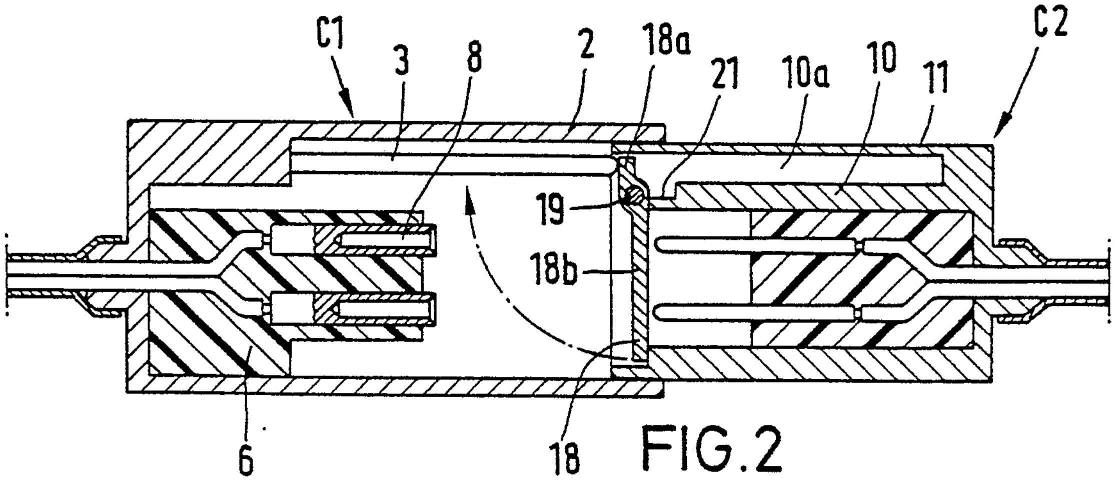


FIG.2

EP 0 232 792 A1

# Elektrische Steckverbindung

Die Erfindung betrifft eine elektrische Steckverbindung mit zwei zusammenpassenden Steckerteilen, die jeweils ein abschirmendes, an einer Seite offenes rohrförmiges Gehäuse aufweisen und Steckkontakte bzw. Steckfassungen enthalten.

Munition, vorrangig für militärische Zwecke, enthält häufig elektrische Leitungen, über die beim Feldeinsatz elektrische Signale von und zu der Waffe übertragen werden, z.B. für Programmier- und Zündvorgänge. Die Verbindung der elektrischen Leitungen der Munition mit den entsprechenden Leitungen der Waffe wird hergestellt beim Laden der Munition oder kurz vor deren Einsatz auf dem Gefechtsfeld. Hierzu werden zusammenpassende Steckerteile benutzt, deren Öffnungen im nichtgesteckten Zustand zum Schutz gegen Schmutz und Feuchtigkeit abgedeckt sind. Die entsprechenden Schutzvorrichtungen müssen vor dem Zusammenstecken der Steckerteile abgenommen werden.

Der Betrieb eigener und/oder gegnerischer elektrischer Geräte, z.B. Funk-und Radaranlagen, verursacht elektromagnetische Strahlungen, die insbesondere in Frontnähe oder auf dem Gefechtsfeld als Störstrahlungen auf die Munition einwirken. Von Munition mit elektrischen bzw. elektronischen Bauteilen wird daher eine hinreichende elektromagnetische Verträglichkeit (EMV) gefordert, damit Handhabungssicherheit und Funktionssicherheit auch bei Einwirkung elektromagnetischer Störstrahlung gegeben sind. Zu diesem Zweck werden zum Verbinden elektrischer Schaltungen in Waffe und Munition abgeschirmte Leitungen benutzt, die durch ebenfalls abgeschirmte Steckerteile miteinander verbunden werden. Ein Problem bietet hierbei die Verbindungsstelle zwischen den Steckerteilen während des Zusammenfügens und beim Auseinanderziehen. Da die bekannten Steckerteile erst von ihren Schutzvorrichtungen befreit werden müssen, bevor sie mit dem zugehörigen anderen Steckerteil verbunden werden, sind sie vorübergehend stirnseitig offen. Damit ist der Strahlungsschirm unterbrochen und von außen einwirkende Störstrahlung kann ungehindert über die Steckerpole auf die jeweiligen Leitungen einwirken. Dies kann bei entsprechender Strahlungsintensität zu Funktionsstörungen der Munition führen und ggf. zu ihrer Selbstentzündung, z.B. bei Raketen, wo die Störstrahlung eine ungewollte Zündung des Raketenmotors bei Durchführung eines Steckvorganges hervorrufen kann.

Der Erfindung liegt die Aufgabe zugrunde, eine elektrische Steckverbindung der eingangs genannten Art zu schaffen, bei der eine vollständige Schirmung auch unmittelbar vor dem Steckvorgang und während des Steckvorgangs sichergestellt ist.

Die Lösung dieser Aufgabe besteht erfindungsgemäß darin, daß die Öffnung des Gehäuses mindestens eines Steckerteils durch eine abschirmende bewegbare Schutzwand verschlossen ist, die beim Zusammenstecken der Steckerteile die Öffnung erst freigibt, wenn beide Gehäuse sich bereits teilweise überlappen.

Bei der erfindungsgemäßen Steckverbindung werden die Gefährdung des Bedienungspersonals und Funktionsstörungen durch elektromagnetische Störstrahlung dadurch ausgeschlossen, daß die Strahlungsschirmung während des gesamten Steckvorgangs aufrechterhalten bleibt. Der Steckvorgang wird in mehreren Phasen vollzogen. Zuerst werden die Steckergehäuse ineinandergeschoben. Erst wenn sie sich bereits teilweise überlappen, wird die Schutzwand entfernt oder geöffnet; in diesem Zustand ist die Schirmung durch die ineinandergesteckten Gehäuse bereits sichergestellt. Nach dem Öffnen der Schutzwand werden die Steckkontakte in die Steckfassungen geschoben, wodurch die elektrische Verbindung hergestellt wird. Im weiteren Verlauf des Steckvorganges kann eine eventuell vorhandene Kurzschlußeinrichtung unwirksam gemacht werden, die die Pole bis kurz vor Beendigung des Steckvorganges unwirksam gemacht hat.

Beim Lösen der Steckverbindung, z.B. zum Entladen nicht verschossener Munition, bewegen sich alle beteiligten Komponenten wieder in die Ausgangsposition zurück; die abschirmende Schutzwand verschließt die Öffnung des Gehäuses bereits bevor die sich überlappenden Gehäuse voneinander getrennt werden.

Bei einer elektrischen Steckverbindung braucht in der Regel nur das eine Steckerteil in der erfindungsgemäßen Weise gesichert zu werden, nämlich dasjenige Steckerteil, an das der Signalempfänger angeschlossen ist. Bei dem System Waffe-Munition ist dies in der Regel das munitionsseitige Steckerteil.

Vorteilhafte Ausgestaltungen und Weiterbildungen der Erfindung ergeben sich aus den Unteransprüchen sowie der nachfolgenden Beschreibung der Ausführungsbeispiele.

Im folgenden werden Ausführungsbeispiele der Erfindung unter Bezugnahme auf die Zeichnungen näher erläutert. Es zeigen:

Fig. 1 einen Längsschnitt durch die beiden Steckerteile der Steckverbindung vor dem Zusammenstecken bei einem ersten Ausführungsbeispiel,

Fig. 2 die Steckverbindung nach Fig. 1 während des Zusammensteckens,

Fig. 3 dieselbe Steckverbindung im Steckzustand,

Fig. 4 eine Stirnansicht des munitionsseitigen Steckerteils aus Richtung des Pfeiles IV in Fig. 1,

Fig. 5 einen Längsschnitt durch ein Steckerteil mit Dichtung zwischen Klappe und Gehäuse,

Fig. 6 zwei Ausführungsformen der Dichtung bei dem Ausführungsbeispiel nach Fig. 5,

Fig. 7 eine modifizierte Ausführungsform der Steckverbindung mit Dichtung zwischen den beiden Gehäusen,

Fig. 8 ein Ausführungsbeispiel, bei dem die Klappe in dasjenige Steckerteil hinein verschwenkt wird, an dem sie gelagert ist,

Fig. 9 die Steckverbindung nach Fig. 8 in gestecktem Zustand,

Fig. 10 einen Teilschnitt durch eine Modifizierung des Ausführungsbeispiels der Fign. 8 und 9 mit Verriegelungsvorrichtung,

Fig. 11 einen Schnitt durch eine Steckverbindung mit durchstechbarer Schutzwand und

Fig. 12 eine Stirnansicht der durchstechbaren Schutzwand gemäß Fig. 11.

Bei dem Ausführungsbeispiel der Fign. 1 bis 4 besteht das waffenseitige Steckerteil C1 aus einem im wesentlichen rohrförmigen Gehäuse 2 mit rechteckigem Querschnitt. Das Gehäuse 2 besteht aus elektrisch leitendem (abschirmendem) Material und ist am vorderen Ende offen und am rückwärtigen Ende geschlossen. Ein stiftförmiger Stößel 3 erstreckt sich von einem im Gehäuseinneren vorgesehen Sockel frei abstehend nach vorne, wobei der Stößel parallel zur Längsachse des Gehäuse im Abstand von der Gehäusewand verläuft. Durch eine Bohrung in der rückwärtigen Gehäusewand erstrecken sich die Leitungen 5, die außerhalb des Gehäuses von einem Leitungsschirm 4 umgeben sind, dessen Ende auf den von der Gehäuserückwand abstehenden rohrförmigen Ansatz 9 aufgezogen ist. Im Gehäuse 2 ist der Isoliersockel 6 befestigt, durch den die Leitungen 5 hindurchführen und der hülsenförmige Steckfassungen 8 enthält, mit denen die abisolierten Leitungsenden 7 verbunden sind.

Das zugehörige munitionsseitige Steckerteil C2 weist ebenfalls ein abschirmendes (elektrisch leitendes) Gehäuse 11 auf. Dieses Gehäuse ist so ausgebildet und bemessen, daß es durch die vordere Öffnung des Gehäuses 2 hindurch in dieses eingeschoben werden kann, wobei die seitlichen Gehäusewände beider Gehäuse flächenhaft aneinanderliegen. Die Kontaktelemente des Steckerteils C2 sind stiftförmige Steckkontakte 12, die an oder in dem Isoliersockel 15 befestigt sind und nach vorne von diesem in den Hohlraum des Gehäuses hinein abstehen. Die abisolierten Leitungsenden 14 der Leitungen 13 sind im Inneren des Isolierkörpers 15 mit den Steckkontakten verbunden. Die Leitungen 13, die durch eine Bohrung in der Gehäuserückwand hindurchragen, sind mit einem Leitungsschirm 16 umhüllt, der auf den Gehäuseansatz 17 des Gehäuses 11 aufgezogen ist.

Das Gehäuse 11 des Steckerteils C2 weist eine Zwischenwand 10 auf, die einen Raum 10a zur Aufnahme des Stößels 3 von dem Gehäuseinneren abtrennt. An dem vorderen Ende der Wand 10 ist die Schutzwand 18 um die Achse 19 schwenkbar bzw. klappbar gelagert. Auf der Achse 19 sitzt eine Schenkelfeder 20, deren einer Schenkel sich an der Wand 10 abstützt und deren anderer Schenkel die Schutzwand 18 in die Schließposition gegen einen Anschlag des Gehäuses drückt.

Die Schutzwand 18 ist als zweiarmiger Hebel ausgebildet, dessen kurzer Hebelarm 18a im Schließzustand das vordere Ende des Raums 10a verschließt, während der längere Schenkel 18b quer vor die Steckkontakte 12 ragt und den Hauptteil der Gehäuseöffnung verschließt.

Beim Einstecken des munitionsseitigen Steckerteils C2 in das waffenseitige Steckerteil C1 stößt das in dem Gehäuse 2 zurückliegende vordere Ende des Stößels 3 gemäß Fig. 2 gegen den kurzen Hebelarm 18a der Schutzwand 18, wodurch die Schutzwand um die Achse 19 herum in den Hohlraum des Gehäuses 2 hineingeschwenkt wird, währen sich die Wände der Gehäuse 2 und 11 teilweise überdecken. Die Wand des Gehäuses 2 überragt die Steckfassungen 8 und den Isoliersockel 6 in Längsrichtung so weit, daß die Schutzwand 18 während des Eindringens des Gehäuses 11 in das Gehäuse 2 noch verschwenkt werden kann. Der aus den sich überlappenden Wänden der Gehäuse 2 und 11 bestehende äußere Strahlungsschirm ist bereits geschlossen, bevor das vordere Ende des Stößels 3 gegen den Hebelarm 18a drückt. Beim weiteren Ineinanderschieben dringt der Stößel 3 in den Raum 10a ein, wobei sich die Schenkel 18a und 18b schließlich parallel zum Stößel 3 einstellen. Der Schenkel 18a taucht in eine Ausnehmung 21 der Wand 10 ein.

Fig. 3 zeigt den Zustand der ineinandergeschobenen Steckerteile. Die Steckkontakte 12 sind in die Steckfassungen 8 eingedrungen, der Stößel 3 ist in den Raum 10a eingetaucht und der Schenkel 18b der Schutzwand 18 befindet sich in einem Spalt zwischen dem Isoliersockel 6 und der Wand des Gehäuses 2.

Aus Fig. 4 ist zu ersehen, daß das Gehäuse 11 (ebenso wie das Gehäuse 2) rechteckigen Querschnitt hat, wobei die Achse 19 rechtwinklig zur Hauptachse des Gehäuses verläuft.

Fig. 5 zeigt eine modifizierte Ausführungsform des Steckerteils C2, bei dem der Schutz gegen Einstrahlung durch eine elektrisch leitende Dichtung 26 verbessert ist, die an dem Rand 25 befestigt ist, der die Öffnung begrenzt, welche von dem Hebelarm 18b der Schutzwand 18 verschlossen wird. Die Fign. 6a und 6b zeigen verschiedene Querschnittsformen der Dichtung 26. Diese Dichtung bewirkt nicht nur die Sicherheit gegen das Eindringen elektromagnetischer Wellen in das Gehäuse 11, sondern schützt das Gehäuseinnere auch gegen Feuchtigkeit und Schmutz.

Das Ausführungsbeispiel von Fig. 7 entspricht dem ersten Ausführungsbeispiel, jedoch ist zusätzlich eine elektrisch leitende und somit abschirmende Dichtung 30 vorgesehen, die in einer Nut am Umfang des inneren Gehäuses 11 befestigt ist und abdichtend gegen die Innenwand des äußeren Gehäuses 2 drückt. Die Dichtung 30 befindet sich in der Nähe des vorderen Endes des Gehäuses 11.

Fig. 8 zeigt ein Ausführungsbeispiel, bei dem die Schutzwand 18 als einarmiger Hebel ausgebildet ist, der um die Achse 19 herum in das Innere des Gehäuses 11 schwenkbar ist. Das Steckerteil C1 enthält keinen Stößel. Die Funktion des Stößels übernehmen die Steckfassungen 8 bzw. der Isoliersockel 6. Diese stoßen beim Einschieben des Steckerteils C2 in das Steckerteil C1 gegen die schwenkbare Schutzwand 18 des Steckerteils C2 und klappen diese um 90° in das Gehäuse 11 hinein. Der vor den vorderen Enden der Steckkontakte 12 liegende Hohlraum 41 des Gehäuses 11 hat eine solche Länge, daß die Schutzwand 18 in ihm verschwenkt werden kann, ohne gegen die Steckkontakte zu stoßen, während die Gehäuse 11 und 2 bereits teilweise übereinandergeschoben sind.

Fig. 9 zeigt die Steckerteile der Fig. 8 im eingeschobenen Zustand. Man erkennt, daß die Schutzwand 18 zur Seite geschwenkt ist und sich gegen die Seitenwand des Isoliersockels 6 legt. Auch bei diesem Ausführungsbeispiel ist eine (nicht dargestellte) Feder vorhanden, die die Schutzwand 18 in der Schließposition (Fig. 8) gegen einen Anschlag 31 am vorderen Ende des Gehäuses 11 drückt.

Fig. 10 zeigt ein Ausführungsbeispiel, bei dem die Schutzwand 18, die in das Gehäuse 11 verschwenkt werden kann, im Schließzustand durch eine Verriegelungsvorrichtung 32 festgehalten wird. Am Gehäuse 11 ist ein Fanghaken 33 gelagert, der um eine Achse 34 schwenkbar ist und von einer Schraubenfeder 35 in die Verriegelungsposition gedrückt wird. Die Bewegung des Fanghakens 33 in Kraftrichtung der Feder 35 ist durch einen (nicht dargestellten) Anschlag begrenzt. An der Außenseite der Schutzwand 18 ist ein Haken 36 angebracht, der im Schließzustand mit dem Fanghaken 33 zusammengreift, so daß die Schutzwand 18 festgehalten wird und nicht durch äußeren Druck verschwenkt werden kann. Beim Einschieben des Isoliersockels 6 in das Gehäuse 11 drückt eine Kante des Isoliersockels gegen eine Schrägfläche 37 des Fanghakens 33, wodurch der Fanghaken entgegen der Wirkung der Feder 35 zurückgedrückt wird und den Haken 36 freigibt. Beim nachfolgenden weiteren Einschieben wird die Schutzwand 18 wie bei dem Ausführungsbeispiel der Fign. 8 und 9 verschwenkt. Werden die Steckerteile auseinandergezogen, dann wird die Schutzwand 18 von ihrer Feder in die in Fig. 10 dargestellte Position gedrückt, wobei der Haken 36 gegen die Schrägfläche 38 des Fanghakens 33 drückt und diesen zurückschwenkt. Die abgebogene Hakenspitze 39 rastet dann in einer Ausnehmung 40 zwischen den beiden Schrägflächen 37 und 38 des Fanghakens 33 ein. Dadurch wird eine selbsttätige Verriegelung der Schutzwand 18 in der Schließposition erreicht.

Bei dem Ausführungsbeispiel der Fig. 11 und 12 ist die Schutzwand 39 an dem Steckerteil C2 angebracht. Das Gehäuse des Steckerteils C1 ist auf das Steckerteil C2 aufschiebbar. Die Schutzwand 39 besteht aus elastischem elektrisch leitendem Material und sie weist vor den Steckkontakten 12 jeweils eine selbstschließende Öffnung 43, z.B. in Form eines Kreuzschlitzes, auf. Die Steckfassungen 8 haben auf ihrer äußeren Oberfläche einen Mantel 42, der sie gegenüber der Schutzwand 39 elektrisch isoliert. Beim Zusammenschieben der Steckerteile stoßen die Steckfassungen 8 durch die Öffnungen 43 hindurch und schieben sich auf die Steckkontakte 12. Dieses Durchstoßen erfolgt erst, wenn sich die Seitenwände der Gehäuse 2 und 11 bereits überlappen.

Beim Ineinanderfügen der Steckerteile muß für die innere Entlüftung gesorgt werden. Hierzu sind bei allen Ausführungsbeispielen (nicht dargestellte) Entlüftungskanäle oder Entlüftungsschleusen vorgesehen.

Die beiden ineinandergesteckten Steckerteile können außerdem durch einen (nicht dargestellten) Verschluß gegeneinander verriegelt werden, so daß sie nicht unbeabsichtigt auseinandergezogen werden können.

## Ansprüche

1. Elektrische Steckverbindung mit zwei zusammenpassenden Steckerteilen (C1,C2), die jeweils ein abschirmendes, an einer Seite offenes rohrförmiges Gehäuse (2,11) aufweisen und Steckfassungen (8) bzw. Steckkontakte (12) enthalten, **dadurch gekennzeichnet**, daß die Öffnung des Gehäuses (2,11) mindestens eines Steckerteils durch eine abschirmende bewegbare Schutzwand - (18,39) verschlossen ist, die beim Zusammenstecken der Steckerteile die Öffnung erst freigibt, wenn beide Gehäuse sich bereits teilweise überlappen.

2. Steckverbindung nach Anspruch 1, dadurch gekennzeichnet, daß die Schutzwand (18) eine - schwenkbar gelagerte Klappe ist, die von einer Feder (20) in Schließrichtung vorgespannt ist.

3. Steckverbindung nach Anspruch 2, dadurch gekennzeichnet, daß die Klappe als zweiarmiger Hebel ausgebildet ist und daß ein an dem anderem Steckerteil (C1) vorgesehener Stößel (3) gegen den kurzen Hebelarm (18a) stößt und dadurch den längeren Hebelarm (18b) in das Gehäuse (2) des anderen Steckerteils (C1) verschwenkt.

4. Steckverbindung nach Anspruch 2, dadurch gekennzeichnet, daß die Klappe in das Gehäuse - (11) desjenigen Steckerteils (C2) schwenkbar ist, an dem sie gelagert ist.

5. Steckverbindung nach einem der Ansprüche 2 bis 4, dadurch gekennzeichnet, daß elektrisch leitende Dichtungsmittel (26) zum Abdichten und Abschirmen des Spalts zwischen der Öffnung des Gehäuses (11) und der Klappe vorgesehen sind.

6. Steckverbindung nach einem der Ansprüche 4 bis 5 gekennzeichnet durch eine Verriegelungsvorrichtung (32), die die Schutzwand (18) im Schließzustand festhält und beim Steckvorgang selbsttätig entriegelt.

7. Steckverbindung nach einem der Ansprüche 1 bis 6, dadurch gekennzeichnet, daß eines der Gehäuse (2,11) mit einer umlaufenden elektrisch leitenden Dichtung (30) an dem anderen Gehäuse anliegt.

8. Steckverbindung nach Anspurch 1, dadurch gekennzeichnet, daß die Schutzwand (39) eine flexible Wand ist, die selbstschließende Öffnungen - (43) für den Durchtritt der Steckfassungen (8) aufweist und daß die äußere Oberfläche der Steckfassungen (8) durch einen Mantel (42) elektrisch isoliert ist.

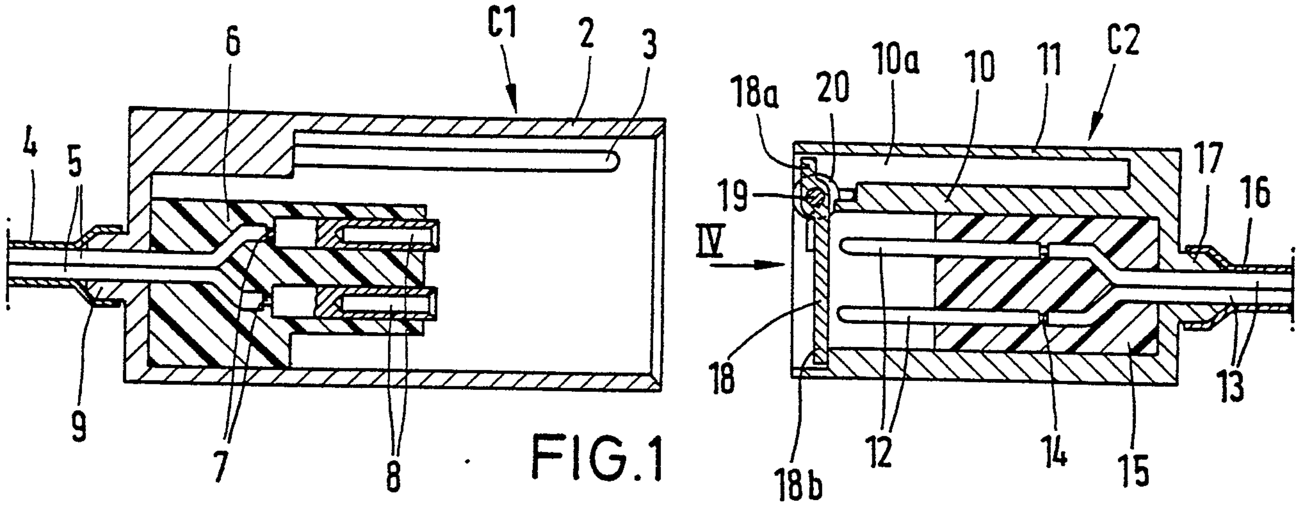


FIG.1

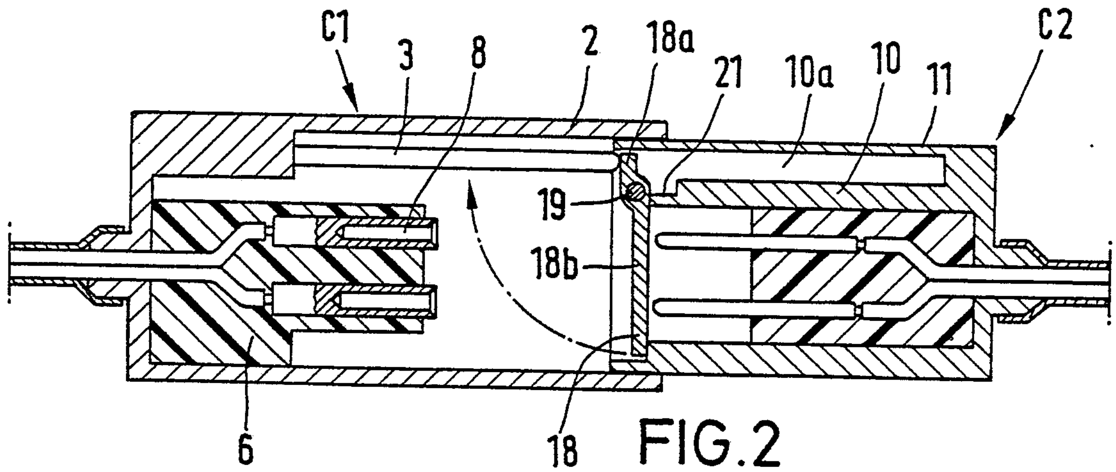


FIG.2

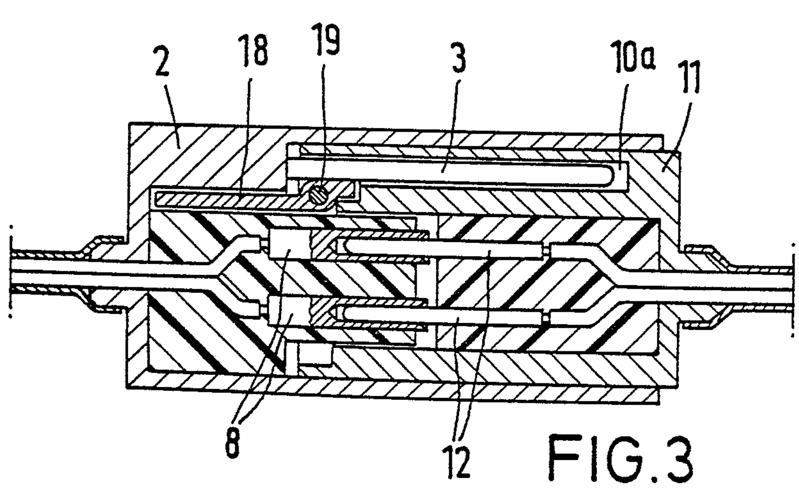


FIG.3

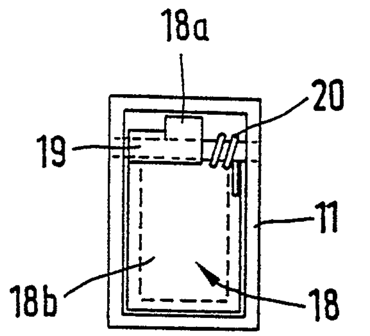


FIG.4

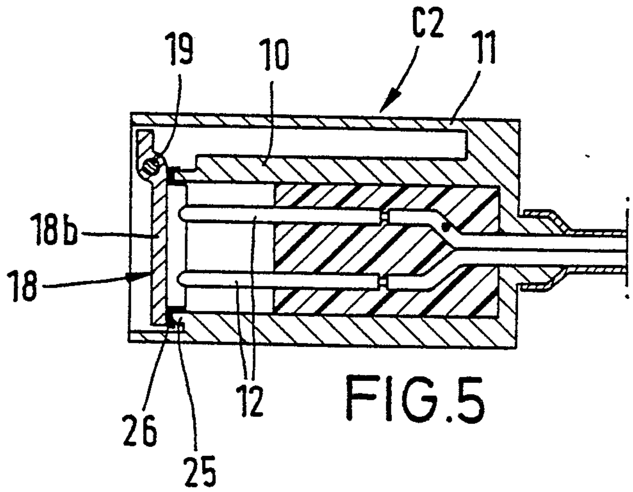


FIG.5

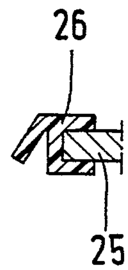


FIG.6a

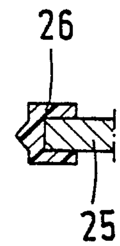


FIG.6b

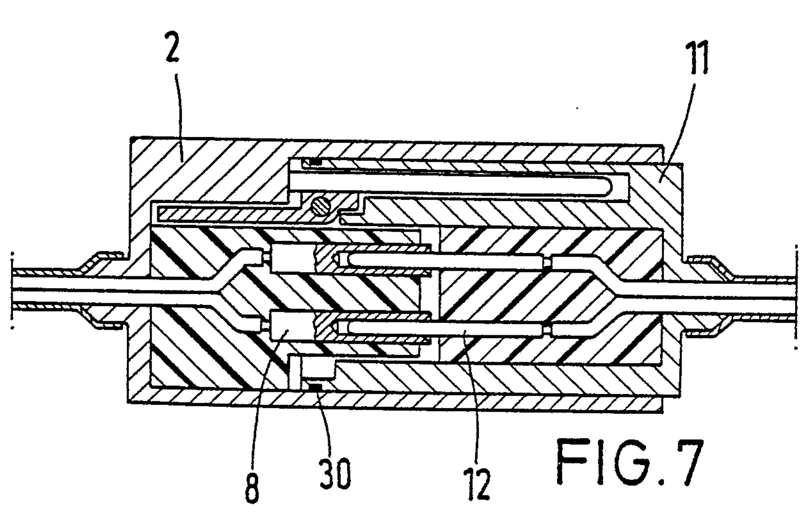


FIG.7

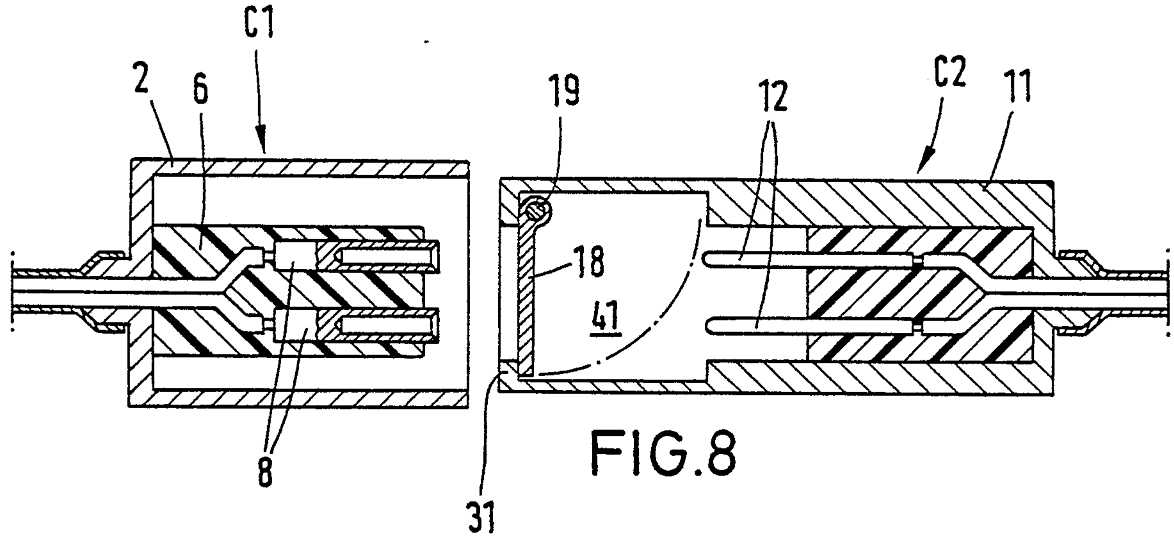


FIG.8

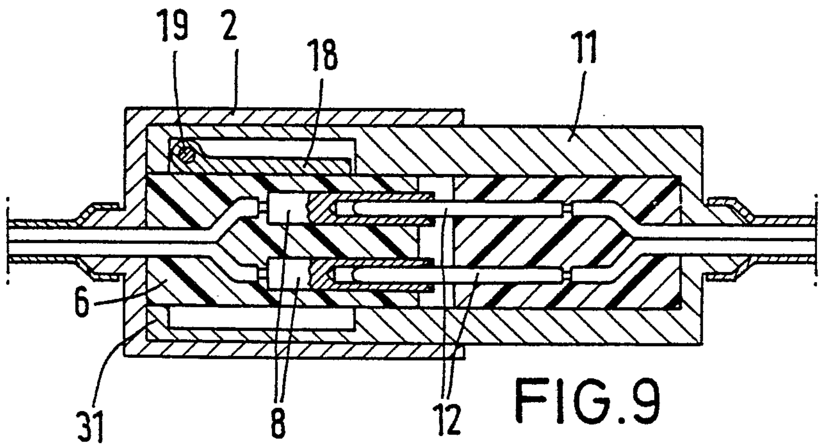


FIG.9

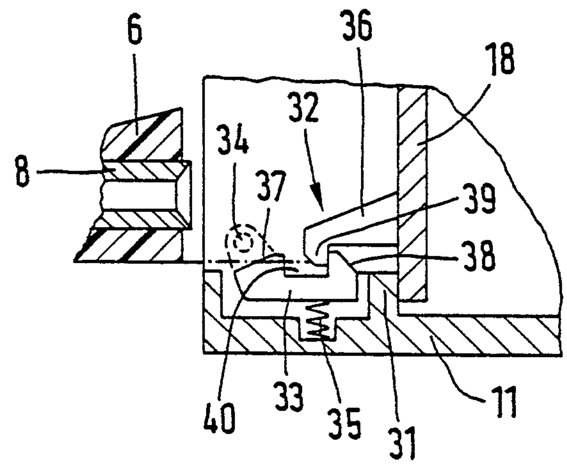


FIG.10

FIG.11

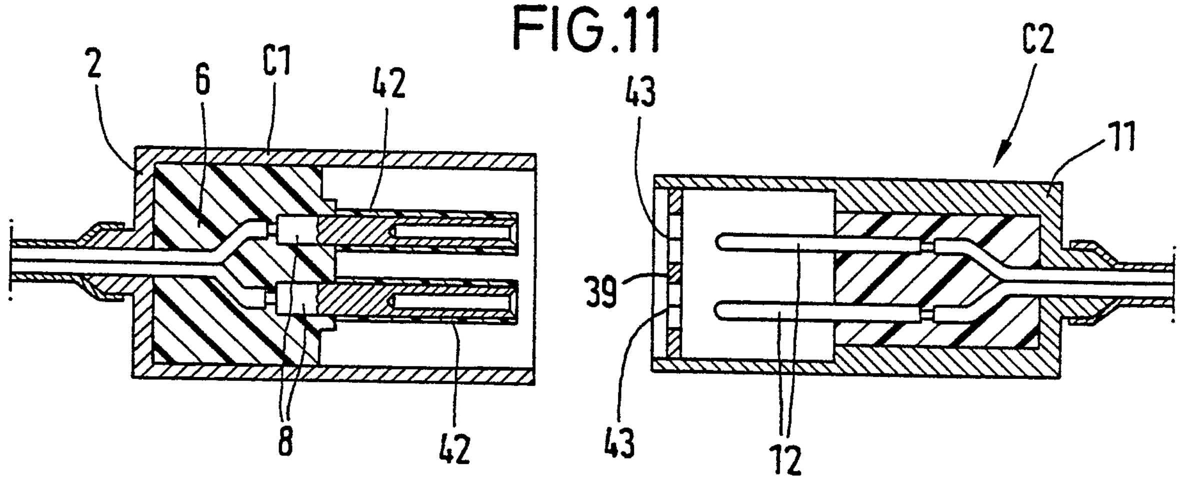


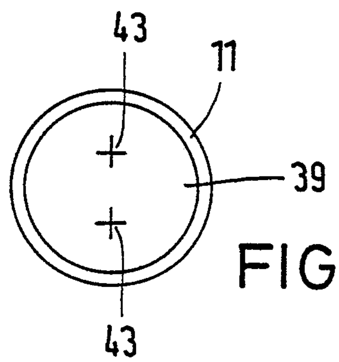


FIG.12

Europäisches Patentamt

# EUROPÄISCHER RECHERCHENBERICHT

Nummer der Anmeldung

EP 87 10 1090

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0 106 432 (AUTOMATION INDUSTRIES INC.) * Seite 7, Zeile 15 - Seite 8, Zeile 14; Seite 9, Zeilen 1-15; Figuren 1-4 * --- | 1 | H 01 R 13/453<br>H 01 R 13/658 |
| A | DE-A-2 918 784 (HARTMANN & BRAUN) * Seite 6, Zeilen 16-21, 26 - Seite 7, Zeile 2; Figuren 1-4 * --- | 2,4 | |
| A | DE-A-3 317 480 (BBC) * Seite 5, Zeile 35 - Seite 6, Zeile 8; Figur 1 * --- | 2,5 | |
| A | GB-A-2 135 533 (ITT INDUSTRIES INC.) * Seite 1, Zeilen 84-129; Figur 3 * ----- | 7 | **RECHERCHIERTE SACHGEBIETE (Int. Cl.4)**<br>H 01 R 13/00 |

Der vorliegende Recherchenbericht wurde für alle Patentansprüche erstellt.

| Recherchenort | Abschlußdatum der Recherche | Prüfer |
|---|---|---|
| BERLIN | 13-05-1987 | LEOUFFRE M. |

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument